## Europäisches Patentamt
## European Patent Office
## Office européen des brevets

(11) Numéro de publication: **0 231 747 B1**

(12) **FASCICULE DE BREVET EUROPEEN**

(45) Date de publication du fascicule du brevet:
08.08.90

(21) Numéro de dépôt: 87100052.7

(22) Date de dépôt: 05.01.87

(51) Int. Cl.⁵: **H02K 55/02**

(54) **Stator à enroulements triphasés supraconducteurs.**

(30) Priorité: 08.01.86 FR 8600181

(43) Date de publication de la demande:
12.08.87 Bulletin 87/33

(45) Mention de la délivrance du brevet:
08.08.90 Bulletin 90/32

(84) Etats contractants désignés:
AT CH DE FR GB IT LI

(56) Documents cités:
GB-A- 2 123 219

PATENT ABSTRACTS OF JAPAN,
vol. 9, no. 315 (E-365)[2038], 11-12-1985; &
JP-A-60 148 348 (TOSHIBA K.K.) 05-08-1985

(73) Titulaire: GEC ALSTHOM SA, 38, avenue Kléber,
F-75116 Paris(FR)

(72) Inventeur: Brunet, Yves, 24, rue Jean-Jaurès,
F-38610 Gieres(FR)
Inventeur: Tixador, Pascal, 16, rue Concordet,
F-38000 Grenoble(FR)

(74) Mandataire: Weinmiller, Jürgen et al,
Lennéstrasse 9 Postfach 24, D-8133 Feldafing(DE)

ACTORUM AG

## Description

La présente invention concerne un stator à enroulements triphasés supraconducteurs pour machine électrique, comprenant des éléments tubulaires et des flasques d'extrémité formant une enceinte cryogénique contenant un bain d'hélium liquide à très basse température, dans laquelle sont disposés les enroulements, un élément tubulaire supportant cette enceinte par une de ses extrémités et fixé par l'autre de façon étanche sur un flasque, des écrans annulaires de réflexion du rayonnement thermique radial, et des amenées de courant aux enroulements.

On a jusqu'ici proposé de constituer les éléments tubulaires et les flasques d'extrémités formant l'enceinte contenant les enroulements supraconducteurs, ainsi que l'élément tubulaire supportant cette enceinte et les écrans annulaires, en métal amagnétique, tel que des aciers austénitiques, notamment ceux connus sous les désignations A 286 ou A 316 LN. De tels aciers présentent néanmoins des pertes par courant de Foucault non négligeables, ce qui entraîne des pertes thermiques et une consommation d'énergie accrue pour assurer le refroidissement des enroulements supraconducteurs à l'aide d'un cycle d'hélium.

On pouvait songer à remplacer les métaux amagnétiques ci-dessus par des matériaux composites fibre de verre-résine de conductibilités thermique et électrique très faibles, les écrans de réflexion du rayonnement thermique radial étant revêtus de minces feuilles métalliques polies réfléchissant le rayonnement, mais ceux-ci, du fait de la mauvaise conductibilité thermique des matériaux composites fibres de verre-résine, devaient rester à une température relativement trop élevée, et entraîner des pertes par rayonnement de l'élément tubulaire de support de l'enceinte ou des écrans annulaires vers l'enceinte contenant les enroulements. Une enceinte en matériau isolant (plastique renforcé de fibres de verre) contenant l'enroulement statorique d'une machine électrique tournante supraconductrice est décrite dans JP-A 60 148 348.

La présente invention a pour but de procurer un stator à enroulements triphasés supraconducteurs, présentant de faibles pertes par conductibilité calorifique et par courants de Foucault, mais dont l'élément tubulaire de support de l'enceinte contenant les enroulements et les écrans de réflexion du rayonnement externe restent à une température très basse, telle qu'ils n'entraînent pas de pertes thermiques importantes par leur propre rayonnement vers l'enceinte contenant les enroulements.

Le stator selon l'invention est caractérisé en ce que les éléments tubulaires et les flasques d'extrémité formant l'enceinte, l'élément tubulaire de support de celle-ci et les écrans annulaires de réflexion du rayonnement thermique radial sont à base d'un matériau non conducteur de l'électricité, de préférence en un matériau composite fibres de verre-résine, et en ce que les écrans annulaires de réflexion du rayonnement thermique radial sont revêtus de nappes de fils en un métal de bonne conductibilité calorifique, mises en un de leurs points en liaison de conduction thermique avec un dispositif d'échange de chaleur avec une chambre de circulation d'hélium gazeux évacué de l'enceinte.

Il répond en outre de préférence à au moins l'une des caractéristiques suivantes :
- La liaison de conduction thermique entre un point de l'élément tubulaire de support de l'enceinte, ou un point de l'écran annulaire interne de réflexion du rayonnement thermique radial, et le dispositif d'échange de chaleur, est constituée par une tresse de fils de métal bon conducteur de la chaleur.
- La liaison de conduction thermique entre un point de l'écran annulaire interne de réflexion du rayonnement thermique radial et le dispositif d'échange de chaleur est constituée par une jonction métallique entre une extrémité de cet écran et la paroi de la chambre de circulation d'hélium gazeux évacué de l'enceinte cryogénique.
- La dispositif d'échange de chaleur comprend une couronne de métal conducteur fritté disposée dans la chambre de circulation d'hélium gazeux évacué de l'enceinte.
- L'enceinte est supportée du côté opposé à celui par lequel elle est reliée à l'élément tubulaire de support par des tiges en acier inoxydable, de préférence par trois groupes de tiges à 120°, fixées au cylindre formant enveloppe extérieure. Ceci réduit les vibrations mécaniques.
- Il est relié aux amenées de courant par l'intermédiaire d'un boîtier de circulation d'hélium à très basse température muni de pastilles de métal conducteur fritté percées de passage des amenées de courant.
- Les amenées de courant sont en un métal conducteur normal, et ces amenées sont enroulées sur un tube fraisé en hélice, lui-même contenu dans un tube externe coaxial de diamètre légèrement supérieur au diamètre externe du tube fraisé, et délimitant un circuit hélicoîdal de sortie d'hélium à très basse température au contact des amenées de courant.

Il est décrit ci-après, à titre d'exemple et en référence aux figures du dessin annexé, un stator à enroulements triphasés supraconducteurs pour alternateur selon l'invention.

La figure 1 représente une vue d'ensemble du stator, en partie en coupe, en partie en élévation.

La figure 2A représente à plus grande échelle en coupe la zone A de la figure 1.

La figure 2B représente à plus grande échelle en coupe la zone B de la figure 1.

La figure 3 montre à échelle encore plus agrandie le détail III de la figure 2B.

La figure 4 montre à échelle encore plus agrandie le détail IV de la figure 2B.

La figure 5A représente à échelle égrandie la partie gauche du dispositif d'amenée de courant.

La figure 5B représente à échelle agrandie la partie droite du dispositif d'amenée de courant.

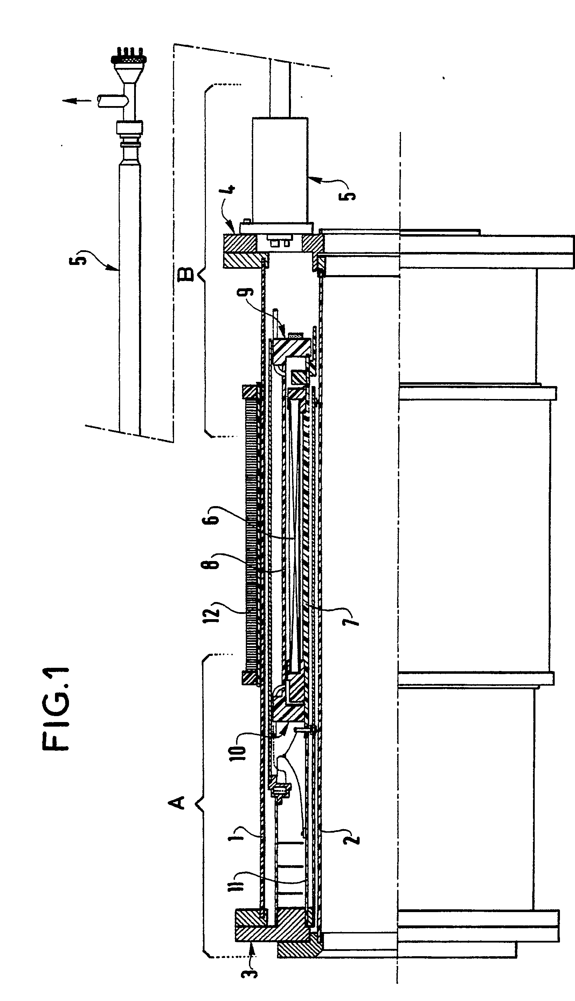

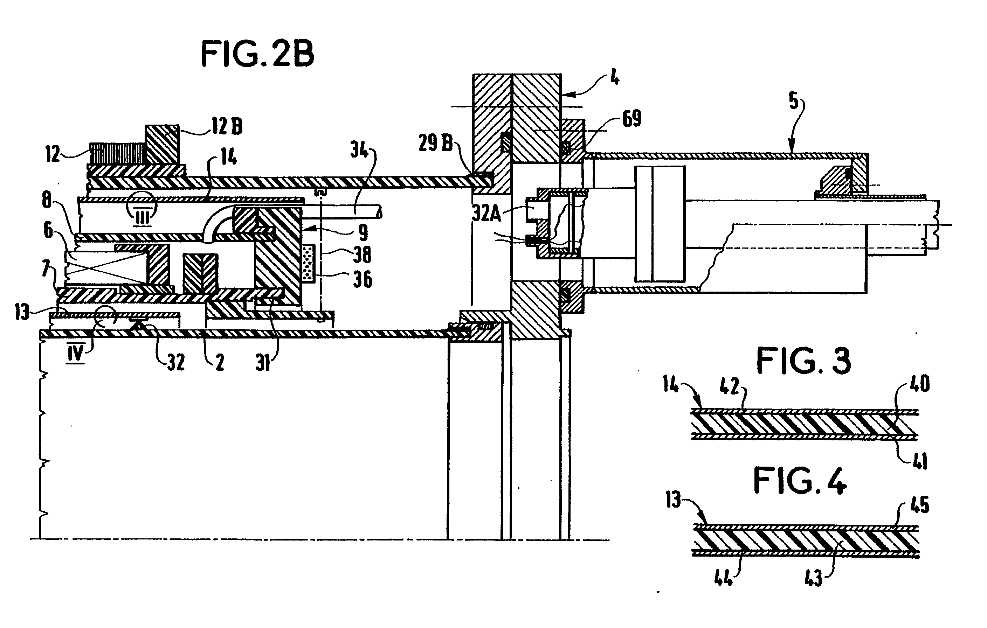

Dans la figure 1, le stator est contenu entre les enceintes cylindriques coaxiales 1 et 2, en matériau composite fibres de verre-résine époxy, enserrées à leurs extrémités dans les flasques 3 et 4. Ces derniers étant en dehors du champ magnétique variable, peuvent être métalliques. L'organe d'amenée de courant 5 est disposé sur la droite et relié au flasque de droite 4. Les enroulements supraconducteurs 6 sont disposées dans une enceinte délimitée par les tubes 7 et 8, tous deux en matériau composite fibres de verre-résine époxy, enserrés entre les flasques d'extrémités 9 et 10 également en matériau composite. Le tube extérieur 8 et le flasque droit 9 sont démontables, permettant ainsi un accès aisé aux enroulements 6. L'enceinte contenant les enroulements est maintenue du côté gauche par un tube 11 en composite fibres de verre-résine époxy, et de l'autre côté par trois groupes à 120° de tiges en acier inoxydable 38, fixées au cylindre extérieur 1, mieux visibles sur la figure 2B.

Pour éviter toute perturbation magnétique à l'extérieur de la machine, une couronne magnétique 12, maintenue entre deux flasques 12A, 12B, canalise le flux magnétique.

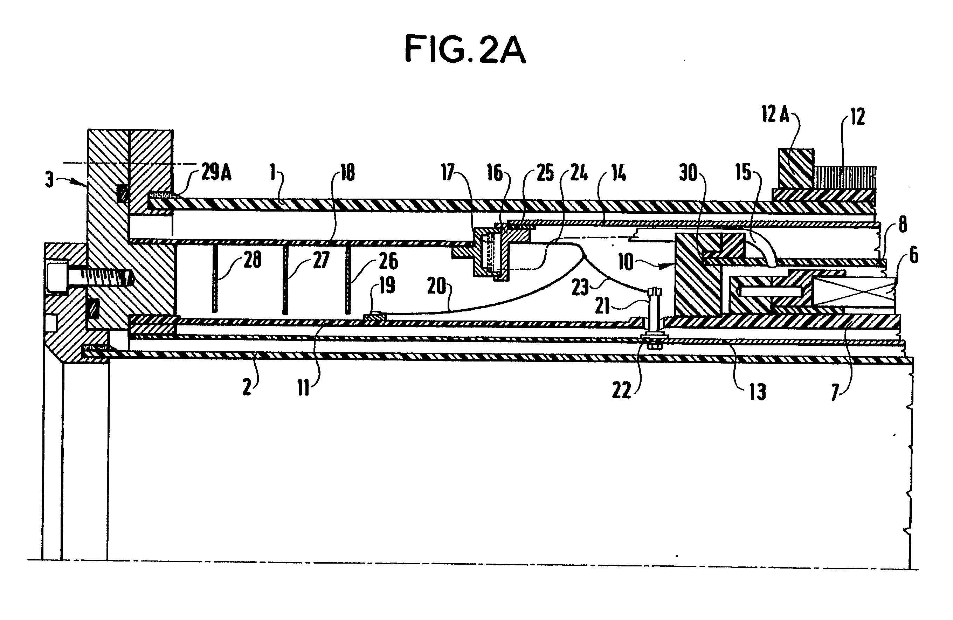

La figure 2A montre plus en détail le dispositif de maintien à basse température d'un point du tube-support pour réduire les pertes thermiques par conduction solide axiale, et des écrans thermiques destinés à réduire les pertes thermiques par rayonnement radial.

Ceux-ci sont mis en liaison thermique avec un échangeur 16, dans lequel circule de l'hélium gazeux froid issu de l'enceinte contenant les enroulements supraconducteurs, et évacué de celle-ci par le conduit 15. Dans cet échangeur, l'hélium froid traverse une couronne de métal fritté 17, par exemple en billes de cuivre fritté, en liaison thermique avec le pourtour de l'échangeur 16, puis est évacué par un conduit non représenté. Cet échangeur est fixé à l'extrémité d'une enveloppe 18 en composite fibres de verre-résine époxy. L'enveloppe 18, dans la zone hors du champ magnétique variable, supporte des couronnes de cuivre 26, 27, 28 sur lesquelles est disposé un super-isolant (non représenté) formé de feuilles alternées d'aluminium poli et de voile de fibres de verre, l'ensemble des couronnes de cuivre et du super-isolant réduisant les pertes thermiques par rayonnement latéral. D'autre part, elle est recouverte de super-isolant pour réduire les pertes thermiques par rayonnement radial.

L'écran thermique 14, comme représenté à plus grande échelle en figure 3, se compose d'un support de composite fibres de verre-résine époxy 40 sur la face interne duquel est adhérisée une nappe de fils de cuivre 41. Celle-ci est maintenue à la température de l'échangeur 16 par conduction. Le diamètre des fils de cuivre est suffisamment petit pour limiter les pertes par courants de Foucault, mais reste suffisant pour assurer une bonne conduction axiale. Il est par exemple de 0,5 à 0,8 mm. Leur surface est polie afin d'améliorer son émissivité. La surface externe de l'écran 14 est munie de bandes d'aluminium poli collées 42.

De même, l'écran thermique 13, disposé du côté interne de l'enceinte des enroulements, se compose, comme représenté à plus grande échelle en figure 4, d'un support de composite fibres de verre-résine époxy 43, sur la surface externe duquel est adhérisée une nappe de fils de cuivre 44. La surface interne de l'écran est munie de bandes d'aluminium poli collées 45. Celle-ci sont reliés à l'échangeur 16 par une jonction métallique 25.

Cet écran est supporté par le flasque 3 et par le tube interne 2 par l'intermédiaire de cales à faible conductibilité thermique 32 (fig.2B).

Le tube-support 11 présente la même structure.

Le maintien de l'écran 13 et du tube-support 11 à la basse température de l'échangeur 16 est assuré à l'aide de tresses de fils de cuivre 20, 23 et 24. La tresse 20 est fixée au tube 11 en bon contact avec sa nappe de fils de cuivre au point 19, cependant que la tresse 23 est fixée au plot 21, lui-même fixé au point 22, de l'écran 13, en bon contact avec sa nappe de fils de cuivre. Les deux tresses 20 et 23 sont reliées à une tresse 24, elle-même fixée par son extrémité sur la surface externe de l'échangeur 16.

Les liaisons entre les tubes en composite fibres de verre-résine époxy et les flasques métalliques, par exemple les liaisons 29A, 29B entre le tube 1 et les flasques d'extrémité 3 et 4 fig.2A, 2B est assurée à l'aide de la colle cyanoacrylique commercialisée sous la désignation "Stycast".

L'étanchéité est assurée à l'aide de joints silicone non perméables à l'helium à basse température, tels que ceux commercialisés sous la désignation "Sylastène", par exemple les joints 30 sur le flasque 10, 31 sur le flasque 9. Ces liaisons étanches mais démontables peuvent être maintenues par des systèmes vis écrou métalliques ayant un volume minimal pour limiter les courants de Foucault qui peuvent s'y développer.

Le vide à l'intérieur du cryostat, de l'ordre de 10$^{-3}$ pascals, amélioré par cryopompage, est maintenu dans le temps par une cartouche de charbon actif 36.

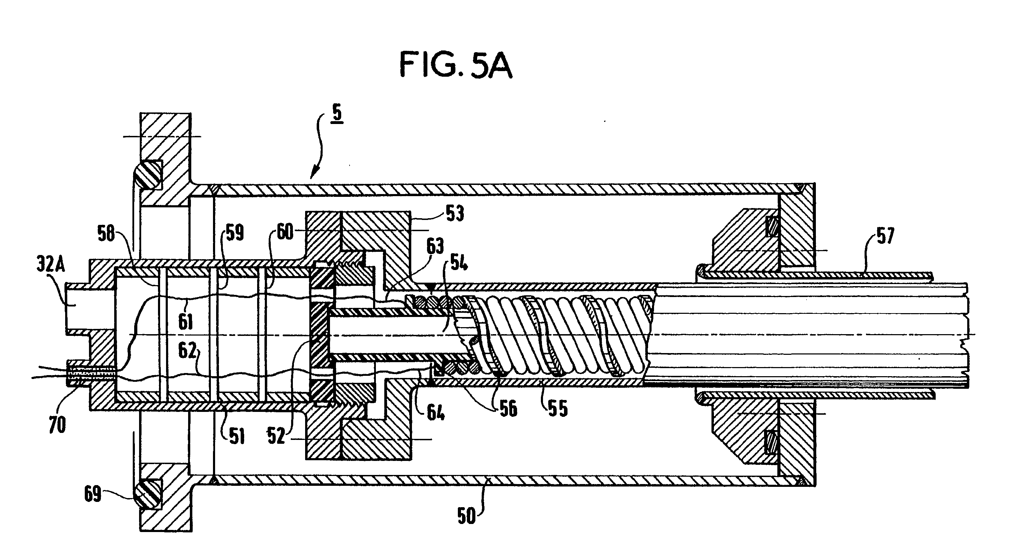

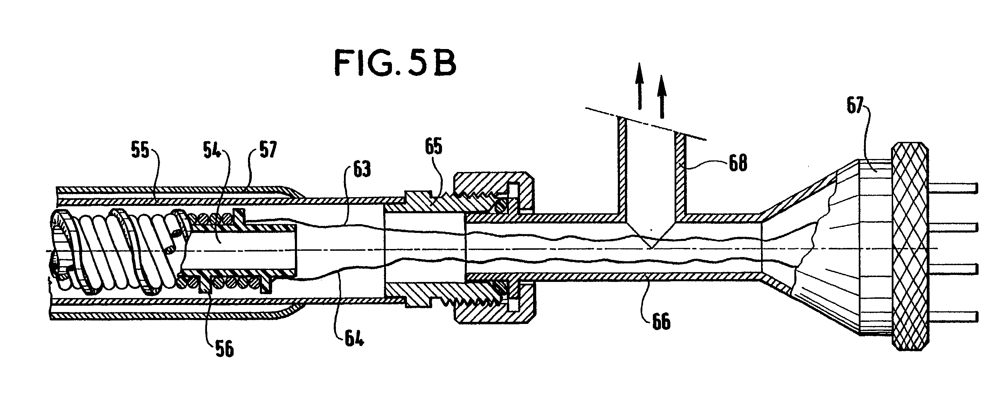

Les amenées de courant sont représentées en figures 5A et 5B. Dans l'exemple choisi, elles comportent quatre fils (cas d'un enroulement triphasé en étoile avec neutre sorti), comme on le voit par la connexion 67 en figure 5B. La boîte de connexion 50 offre la possibilité d'une liaison avec une ligne cryogénique ou une ligne classique en cuivre. Elle est refroidie par les vapeurs d'hélium directement issues de l'enceinte cryogénique, arrivant par la tubulure 32A.

Les fils supraconducteurs venant des enroulements y font leur jonction, soit avec des fils supraconducteurs, soit avec des fils en cuivre. Dans le cas représenté, les fils de sortie sont en cuivre. Les fils supraconducteurs tels que 61, 62 après avoir traversé une jonction étanche 70 en colle cyanoacrylique "Stycast", passent dans le boîtier 51, à travers des pastilles de cuivre fritté 58, 59, 60 permettant de les maintenir à basse température, puis traversent le bouchon vissé 52 avant de rejoindre les fils de cuivre tels que 63, 64 venant du tube 55 se terminant par l'embout 53 fixé de façon étanche sur l'extrémité du boîtier 51.

Les fils de cuivre sont enroulés sur un tube 54 fraisé en hélice, disposé à l'intérieur du tube 55. La cloison hélicoïdale 56 oblige ainsi les vapeurs d'helium à suivre un trajet hélicoïdal au contact des conducteurs en assurant un refroidissement efficace de ceux-ci. Le tube 55 est lui-même contenu hors du boîtier 50 jusqu'à son extrémité chaude dans un tube coaxial 57 relié à l'enceinte interne de ce boîtier.

A son extrémité chaude, le tube 55 se termine pour un embout 65 vissé dans l'extrémité d'un raccord 66 se terminant par la connexion électrique 67 et comportant une tubulure latérale 68 d'évacuation de l'hélium réchauffé au contact des conducteurs.

A son extrémité froide, la boîte de connexion est munie d'un joint annulaire 69 assurant l'étanchéité de sa jonction avec le flasque droit 4 de l'enceinte externe du stator.

On comprendra que le stator est aussi muni d'un conduit d'alimentation en hélium liquide, non représenté, dont la liaison amovible avec l'alimentation est assurée par un raccord Johnston, et de sorties auxiliaires pour l'hélium évaporé et les fils de mesure.

## Revendications

1/ Stator à enroulements triphasés supraconducteurs (6) pour machine électrique, comprenant des éléments tubulaires (7, 8) et des flasques d'extrémité (9, 10) formant une enceinte cryogénique contenant un bain d'hélium liquide à très basse température, dans laquelle sont disposés les enroulements, un élément tubulaire (11) supportant cette enceinte par une de ses extrémités et fixé par l'autre de façon étanche sur un flasque (3), des écrans annulaires (13, 14) de réflexion du rayonnement thermique radial, et des amenées de courant aux enroulements, caractérisé en ce que les éléments tubulaires et les flasques d'extrémité formant l'enceinte, ledit élément tubulaire de support (11) de celle-ci et les écrans annulaires de réflexion du rayonnement thermique radial sont à base d'un matériau non conducteur de l'électricité, de préférence en un matériau composite fibres de verre-résine, et en ce que lesdits écrans annulaires de réflexion du rayonnement thermique radial sont revêtus de nappes (41, 43) de fils en un métal de bonne conductibilité calorifique, mises en un de leurs points en liaison de conduction thermique avec un dispositif d'échange de chaleur avec une chambre (16) de circulation d'hélium gazeux évacué de l'enceinte.

2/ Stator selon la revendication 1, caractérisé en ce que la liaison de conduction thermique entre un point (19) de l'élément tubulaire (11) de support de l'enceinte, ou un point (22) d'un écran annulaire interne (13) de réflexion de rayonnement thermique radial et le dispositif d'échange de chaleur est constituée par une tresse (20, 23, 24) de fils de métal bon conducteur de la chaleur.

3/ Stator selon les revendications 1 ou 2, caractérisé en ce que la liaison de conduction thermique entre un point d'un écran annulaire interne (14) de réflexion de rayonnement thermique radial et le dispositif d'échange de chaleur est constituée par une jonction métallique (25) entre une extrémité de cet écran et la paroi de ladite chambre (16) de circulation d'hélium gazeux évacué de l'enceinte cryogénique.

4/ Stator selon l'une des revendications 1 à 3, caractérisé en ce que ledit dispositif d'échange de chaleur comprend une couronne (17) de métal conducteur fritté disposée dans la chambre de circulation d'hélium gazeux évacué de l'enceinte.

5/ Stator selon les revendications 1 à 4, caractérisé en ce que ladite enceinte est supportée du côté opposé à celui par lequel elle est reliée à l'élément tubulaire de support par des tiges en acier inoxydable, de préférence par trois groupes de tiges à 120° (38), fixées au cylindre formant enveloppe extérieure.

6/ Stator selon l'une des revendications 1 à 5, caractérisé en ce qu'il est relié aux amenées de courant par l'intermédiaire d'un boîtier (51) de circulation d'hélium à très basse température muni de pastilles (58, 59, 60) de métal conducteur fritté percées de passage des amenées de courant.

7/ Stator selon l'une des revendications 1 à 6, dans lequel les amenées de courant sont en un métal conducteur normal, caractérisé en ce que ces amenées de courant sont enroulées sur un tube (54) fraisé en hélice, lui-même contenu dans un tube externe coaxial (55) de diamètre légèrement supérieur au diamètre externe du tube fraisé, et délimitant un circuit hélicoïdal de sortie d'hélium à très basse température au contact des amenées de courant.

8/ Stator selon l'une des revendications 1 à 6, caractérisé en ce que lesdites amenées de courant sont en métal conducteur normal.

9/ Stator selon l'une des revendications 1 à 6, caractérisé en ce que lesdites amenées de courant sont en matériau supraconducteur.

## Claims

1. An electric machine stator (6) having superconducting three-phase windings, the stator comprising tubular elements (7, 8) and end plates (9, 10) forming a cryogenic enclosure containing a bath at liquid helium at very low temperature, the windings being disposed in said bath, a tubular element (11) supporting said enclosure at one of its ends and fixed at its other end in sealed manner to an end plate (3), annular screens (13, 14), for reflecting radial thermal radiation, and current leads to the windings, characterized in that the tubular elements and the end plates forming the enclosure, said tubular element (11) supporting the enclosure, and said annular screens reflecting radial thermal radiation are made of a material which does not conduct electricity, preferably a composite material of the glassfiber-resin type, and that said annular screens for reflecting radial thermal radiation are covered with layers (41, 43) of metal wires having a high thermal conductivity, one point of which is put into heat conducting connection with a heat exchanger having a chamber traversed by a flow of gaseous helium evacuated from the enclosure.

2. A stator according to claim 1, characterized in that the heat conducting connection between a point (19) of the tubular element (11) for supporting the enclosure or a point (22) of an inner annular screen (13) for reflecting radial thermal radiation and the heat exchanger is constituted by a braid (20, 23, 24) of wires made of a material which is a good conductor of heat.

3. A stator according to claim 1 or 2, characterized in that the heat conducting connection between a point of an inner annular screen (14) for reflecting radial thermal radiation and the heat exchanger is constituted by a metal junction (25) provided between an end of said screen and the wall of said chamber (16) traversed by the flux of gaseous helium evacuated from the cryogenic enclosure.

4. A stator according to one of claims 1 to 3, characterized in that said heat exchanger comprises a ring (17) of sintered conductive metal disposed in the chamber traversed by the gaseous helium evacuated from the enclosure.

5. A stator according to claims 1 to 4, characterized in that said enclosure is supported at its end opposite to that which is connected to the tubular supporting element by means of rods of stainless steel, preferably by three groups of rods (38) disposed at 120° intervals, which are fixed to the cylinder that forms the outermost envelope.

6. A stator according to one of claims 1 to 5, characterized in that it is connected to the current leads via a box (51) through which very low temperature helium flows, said box being provided with disks (58, 59, 60) of sintered conductive metal having through holes for the current leads.

7. A stator according to one of claims 1 to 6, wherein the current leads are made of a normally conductive metal, characterized in that the current leads are wound around a helically machined tube (54) which is contained in a coaxial outer tube (55) of slightly larger diameter than the outer diameter of the machined tube, thereby delimiting a helical outlet path for the very low temperature helium which is in contact with the current leads.

8. A stator according to one of claims 1 to 6, characterized in that said current leads are made of a metal exhibiting normal conductivity.

9. A stator according to one of claims 1 to 6, characterized in that said current leads are made of a superconducting material.

**Patentansprüche**

1. Stator mit supraleitenden Dreiphasenwicklungen (6) für eine elektrische Maschine, mit rohrförmigen Elementen (7, 8) und Endflanschen (9, 10), die einen Tiefsttemperaturbehälter für ein Bad flüssigen Heliums sehr niedriger Temperatur bilden, in welchem die Wicklungen angeordnet sind, mit rohrförmigen, den Behälter mit einem seiner Enden tragenden und mit dem anderen Ende an einem der Flansche (3) dicht befestigten rohrförmigen Element (11), mit ringförmigen Abschirmungen (13, 14) zum Reflektieren der radialen Wärmestrahlung und mit Stromzuführungen zu den Wicklungen, dadurch gekennzeichnet, daß die den Behälter bildenden rohrförmigen Elemente und die Endflansche sowie das rohrförmige Tragelement (11) für den Behälter und die ringförmigen Abschirmungen zum Reflektieren der radialen Wärmestrahlung aus einem die Elektrizität nicht leitenden Material bestehen, vorzugsweise aus einem Glasfaser-Harz-Verbundmaterial, und daß die ringförmigen Abschirmungen zum Reflektieren der radialen Wärmestrahlung mit Drahtschichten (41, 43) aus einem die Wärme gut leitenden Metall beschichtet sind, welche mit einem ihrer Punkte wärmeleitend mit einer Wärmetauschvorrichtung mit einer Kammer (16) verbunden ist, in der aus dem Behälter kommendes gasförmiges Helium zirkuliert.

2. Stator nach Anspruch 1, dadurch gekennzeichnet, daß die Wärmeleitverbindung zwischen einem Punkt (19) des rohrförmigen den Behälter tragenden Elements (11), oder zwischen einem Punkt (22) einer ringförmigen inneren Abschirmung zum Reflektieren der radialen Wärmestrahlung und der Wärmetauschvorrichtung aus einem Geflecht (20, 23, 24) aus gut wärmeleitenden Metalldrähten besteht.

3. Stator nach den Ansprüchen 1 oder 2, dadurch gekennzeichnet, daß die Wäremleitungsverbindung zwischen einem Punkt einer inneren ringförmigen Abschirmung (14) zum Reflektieren der radialen Wärmestrahlung und der Wärmetauschvorrichtung aus einem metallischen Anschluß (25) zwischen einem Ende dieser Abschirmung und der Wand der Kammer (16) besteht, in der das aus dem Tiefsttemperaturbehälter entnommene Helium zirkuliert.

4. Stator nach einem der Ansprüche 1 bis 3, dadurch gekennzeichnet, daß die Wärmetauschvorrichtung einen Ring (17) aus leitendem Sintermaterial besitzt, der in der Kammer angeordnet ist, in der das aus dem Behälter kommende gasförmige Helium zirkuliert.

5. Stator nach den Ansprüchen 1 bis 4, dadurch gekennzeichnet, daß der Behälter an derjenigen Seite mit Stangen aus rostfreiem Stahl getragen wird, die der Seite, an der der Behälter mit dem rohrförmigen Halterungselement verbunden ist, gegenüberliegt, vorzugsweise über drei Gruppen von Stangen (38) im Abstand von 120°, die an dem die äußere Hülle bildenden Zylinder befestigt sind.

6. Stator nach einem der Ansprüche 1 bis 5, dadurch gekennzeichnet, daß er über ein Gehäuse (51), in dem Helium sehr niedriger Temperatur zirkuliert, an die Stromzuführungen angeschlossen ist, wobei das Gehäuse Scheiben (58, 59, 60) aus leitendem Sintermaterial aufweist, die von Bohrungen für die Stromzuführungen durchdrungen sind.

7. Stator nach einem der Ansprüche 1 bis 6, bei dem die Stromzuführungen aus normalem Leitermaterial bestehen, dadurch gekennzeichnet, daß die Stromzuführungen um ein schraubenförmig angefrästes Rohr (54) gewickelt sind, das seinerseits in einem äußeren koaxialen Rohr (55) mit etwas größerem Durchmesser als dem Außendurchmesser des angefrästen Rohres untergebracht ist und einem schraubenförmigen Austrittsweg für das mit den Stromzuführungen in Berührung stehende Helium sehr niedriger Temperatur begrenzt.

8. Stator nach einem der Ansprüche 1 bis 6, dadurch gekennzeichnet, daß die Stromzuführungen aus normalleitendem Material bestehen.

9. Stator nach einem der Ansprüche 1 bis 6, dadurch gekennzeichnet, daß die Stromzuführungen aus supraleitendem Material bestehen.

FIG.1

FIG.2A

# FIG. 2B

# FIG. 3

# FIG. 4

EP 0 231 747 B1

# FIG. 5A

EP 0 231 747 B1

FIG.5B